# EUROPEAN PATENT APPLICATION

(11) **EP 4 715 773 A1**
(43) Date of publication of application: **25.03.2026**
(21) Application number: 25204070.4
(22) Date of filing: 23.09.2025
(51) Int. Cl.: G07F 17/32, G06Q 20/36, G06Q 20/40, G06Q 30/0207, G06Q 20/38

(54) **SYSTEM AND METHOD TO IMPLEMENT A LOTTERY GAME WITH INCENTIVES FOR PLAYERS TO SPEND LOTTERY WINNINGS AT SPECIFIED THIRD PARTY RETAIL VENDORS**

(30) Priority: 24.09.2024 US 202418894472
(71) Applicant: Scientific Games, LLC, Alpharetta, GA 30004 (US)
(72) Inventor: Fulton, Joseph Corry, Alpharetta, 30004 (US); Waldron, Aaron Kelly, Alpharetta, 30004 (US); Anderson, O Ryan, Alpharetta, 30004 (US)
(74) Representative: Canzler & Bergmeier Patentanwälte Partnerschaft mbB

(57) **Abstract**

A system and method for play of a lottery bonus game encourages players to visit and spend winnings from the lottery game at a third party vendor establishment. Lottery tickets are provided having indicia thereon that identifies one of a plurality of third party vendors. The players have a personalized digital wallet that includes sub-wallets for each of the third party vendors. Upon a player redeeming a lottery ticket, the winnings from the winning lottery ticket are credited to the sub-wallet for the third party vendor identified on the winning lottery ticket. Instructions are provided to the player to visit and spend the winnings credited to the sub-wallet at the third party vendor establishment. An incentive is transferred to the player having a value proportional to the winnings spent at the third party vendor establishment.

## Description

### FIELD OF THE INVENTION

The present invention relates to a ticket-based lottery game that incentivizes players to visit and spend lottery winnings at third party retail vendors identified on the lottery tickets.

### BACKGROUND

Lottery games have become a time honored method of raising revenue for state and federal governments the world over. The success of these games, however, depends on continuous innovations that capture the interests of current players, draw new players to the games, and motivate third party vendors and retail establishments to sell lottery tickets.

As with other consumers, lottery players are becoming more tech savvy, and are interested in conducting various gaming aspects via electronic devices, such as smart phones. The gaming industry is appreciative of this fact and is seeking ways to integrate games and gaming-related functions into the rapidly developing mobile electronic communication age.

With conventional systems and methods, authorized retail vendors within a lottery jurisdiction have been the primary means of lottery ticket sales and distribution. This relationship has been beneficial to the vendors in that lottery players also tend to purchase additional goods in the retail establishment. The gaming authority (e.g., a state or other governmental lottery authority) benefits in that a wide and varied sales and distribution network is provided by the authorized retail establishments.

It is important that new innovations in the gaming industry, particularly with respect to electronic gaming via smart phones or other portable mobile devices, attempt to preserve this mutually beneficial relationship. This is of particular concern to the retail vendors as electronic and on-line lottery ticket sales are growing in acceptance and popularity and could potentially decrease lottery player traffic to the retail establishments.

It would also be beneficial to the lottery industry if non-traditional third party vendors would actively participate as partners or sponsors with the lottery providers even if lottery tickets were not sold in the third party retail establishments.

The lottery industry is thus continuously seeking new and creative gaming scenarios that provide increased entertainment value to players, entice new players, and expand play of lottery games into the smart electronic communication age while at the same time maintaining or increasing lottery player foot traffic to the conventional ticket sales retail establishments and enticing non-traditional third party vendors to sponsor or otherwise partner with lottery providers.

### SUMMARY OF THE INVENTION

Objects and advantages of the invention will be set forth in part in the following description, or may be obvious from the description, or may be learned through practice of the invention.

In particular embodiments, a system and method are provided for play of a lottery game that encourages a player to visit and spend winnings from the lottery game at a third party vendor establishment, which may be an establishment that sells lottery tickets or a non-conventional vendor establishment that does not sell lottery tickets. With the system and method, lottery tickets are provided for play of a primary game having a common prize structure. The lottery tickets include indicia thereon that identifies one of a plurality of third party vendors. For example, the third party vendors may include multiple big-box retail establishments, online shopping networks, online travel or rental sites, retail establishments that also sell lottery tickets, and so forth. It should be appreciated that the invention is not limited to a type or scope of third party vendors or establishments.

The method and system include providing a secure personalized digital wallet for the player, wherein the digital wallet includes sub-wallets for each of the third party vendors. The digital wallets may be established and maintained by a lottery provider.

Upon a player redeeming a winning lottery ticket, the winnings are credited to the sub-wallet for the third party vendor identified on the winning lottery ticket.

The system and method include providing instructions to the player to visit and spend the winnings credited to the sub-wallet at the third party vendor establishment associated with the sub-wallet, wherein the establishment may be a brick-and-mortar store or a web-based establishment. These instructions may be printed on the lottery ticket or provided in electronic form with the digital wallets or at a lottery website linked to the primary game.

The game system and method include transferring an incentive to the player having a value proportional to the winnings spent at the third party vendor establishment. This incentive may take on any form that entices players to visit the establishments, such as a monetary award, points in an award program, discounts at the vendor establishments, and so forth.

In a particular embodiment, the lottery tickets in the primary game are printed or virtual scratch-off lottery tickets.

The winnings credited to the sub-wallet may be for a prize in the common prize structure of the primary game. In an alternate embodiment, the lottery game may include a bonus or second chance game component, wherein the winnings credited to the sub-wallet are for a prize in the bonus or second chance game component.

The sub-wallets may have an actual cash value corresponding to the winnings such that the player spends the winnings directly from the sub-wallet at the third party vendor establishment. In other words, the sub-wallets may be considered cash accounts owned by the player. With this embodiment, the player may be provided with an account identifier (i.e., a debit-type physical or electronic card) that is linked to the sub-wallet and is presented to the third party vendor for transferring funds from the sub-wallet to the third party vendor for purchases made by the player.

In an alternate embodiment, the winnings credited to the sub-wallets are a virtual cash value corresponding to cash awarded directly to the player for the winning lottery tickets. In other words, the sub-wallet does not have an actual cash value but represents the cash from winning lottery tickets that was awarded directly to the player. With this embodiment, the player may be provided with an account identifier (i.e., a physical or electronic card) that is linked to the sub-wallet and is presented to the third party vendor for virtually transferring funds out of the sub-wallet corresponding to an amount spent by the player at the third party vendor establishment.

### BRIEF DESCRIPTION OF THE DRAWINGS

A full and enabling description of the present invention is provided herein, with reference to particular embodiments depicted in the attached drawings and described below:
Fig. 1A depicts an example of a lottery ticket, specifically a scratch-off lottery ticket, configured for play in the system and method of the present invention;
Figs. 1B-1C depict examples of lottery tickets similar to Fig. 1A with each ticket identifying a different third party vendor;
Fig. 2 depicts an example of a lottery ticket, specifically a scratch-off lottery ticket, configured with a bonus or second chance game configured for play in the system and method of the present invention;
Fig. 3 is a table representing a common prize structure in a primary lottery ticket game;
Fig. 4 is a diagram depicting aspects of the method and system of the present invention;
Fig. 5 is a diagram depicting other aspects of the method and system of the present invention;
Fig. 6 is a diagram depicting yet additional aspects of the method and system of the present invention; and
Fig. 7 depicts still other aspects of the method and system of the present method and system.

### DETAILED DESCRIPTION

Reference will now be made in detail to embodiments of the inventive methods and systems, one or more examples of which are illustrated in the drawings. Each embodiment is presented by way of explanation of the invention, and not as a limitation of the invention. For example, features illustrated or described as part of one embodiment may be used with another embodiment to yield still a further embodiment. It is intended that the present invention include these and other modifications and variations as come within the scope and spirit of the invention.

For sake of example only, the following discussion relates to embodiments of the invention drawn to lottery games, including primary games, bonus games, and second chance games sponsored by state or other jurisdictional lottery authorities and implemented by a third-party lottery provider. It should be appreciated, however, that the system and method are just as applicable to gaming activities linked to any manner of other gaming authority, such as games conducted within a gaming establishment (e.g., a casino) for patrons of such establishment, or electronic games conducted via an electronic network, such as the internet, for authorized players.

The present disclosure makes reference to scratch-off lottery tickets for purposes of explaining aspects of the invention. It should be appreciated, however, that the invention is not limited to scratch-off lottery tickets. The game system and method presented herein by be played with any manner of paper or electronic lottery tickets (e.g., quick-pick or draw tickets). The tickets may be printed paper tickets, or may be electronically simulated tickets that are transmitted to and played by the player via an application running on a smart device, such as a mobile phone, tablet, computer, etc.

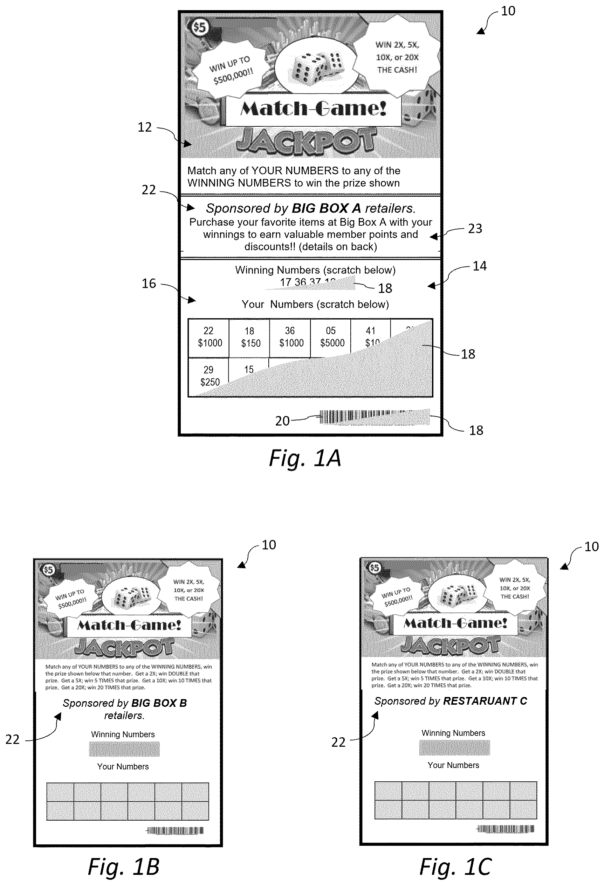

Fig. 1A depicts a scratch-off lottery ticket 10 having a game play area 14 wherein variable game play indicia 16 is provided and covered by a scratch-off coating (SOC) layer 18. In order to reveal the winning or losing status of the ticket 10, the player removes the SOC layer 18 to uncover the underlying game play indicia 16. Thus, the game play indicia 16 is "variable" indicia in that it changes from one ticket 10 to another. In the depicted game, the ticket 10 presents a series of "Winning Numbers" in the game play area 14 covered by the SOC layer 18. A matrix of "Your Numbers" is provided below the "Winning Numbers" in the game player area 14.

The ticket 10 includes game instruction graphics and indicia 12 printed thereon that explain to a player how to play the game embodied on the ticket 10, as well as what constitutes a winning ticket and the prize amounts. The game instruction indicia 12 may be considered as "static" indicia in that, for a given common game, it does not change from one ticket 10 to the other. In Fig. 1A, the instructions 12 convey to the player that a match of any of the "Your Numbers" with any of the "Winning Numbers" wins the prize show below the number, as well as other prize multipliers.

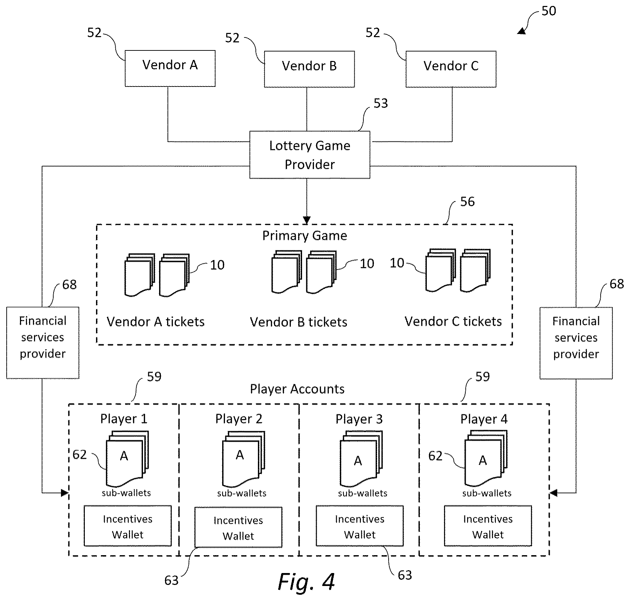

Each lottery ticket 10 may include a validation code 20 printed thereon, which may also be covered by a SOC layer 18, that links the ticket 10 to a validation file contained in a central server or computer system maintained by a lottery provider 53 (Fig. 4). Those skilled in the art appreciate that the validation file contains ticket-specific information for validation and pay-out (redemption) of the ticket 10, including whether or not the ticket 10 qualifies for a bonus or second chance game. When the tickets 10 are presented to a physical redemption center/location 44 for validation and redemption of the prize, a scanner can be used to read the code 20 for verifying (via the ticket-specific information contained in the respective validation file) whether the ticket 10 is a winning ticket and the prize associated with the ticket 10.

As explained in greater detail below, aspects of the present method and system include a partnership or relationship with third-party vendors. For example, the third party vendors may include multiple big-box retail establishments, online shopping networks, online travel or rental sites, restaurants, retail establishments that also sell lottery tickets, and so forth. It should be appreciated that the invention is not limited to a type or scope of third party vendors or establishments. Each of the lottery tickets 10 used in the system and method identify at least one of these third-party inventors associated with the ticket 10. For example, the ticket 10 in Fig. 1A includes indicia 22 that identifies the third-party vendor as "Big Box A" retailer. The ticket 10 also includes instruction indicia 23 that conveys to the player that there is an opportunity to earn an incentive (having an identified value) if the player spends any winnings in the primary lottery game embodied by the ticket 10 at the vendor (explained below).

The ticket 10 of Fig. 1B is similar to Fig. 1A except that the indicia 22 identifies the vendor as "Big Box B" retailers. Likewise, the ticket 10 in Fig. 1C identifies the vendor as "Restaurant C".

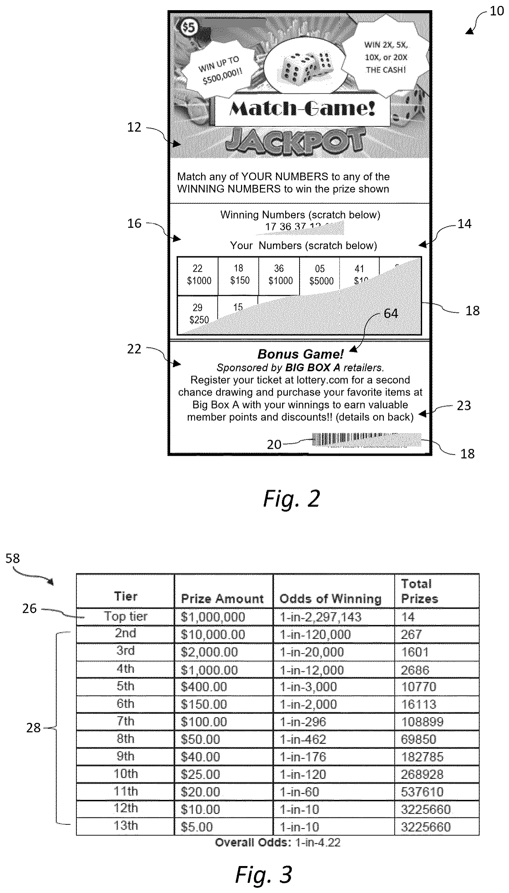

The tickets 10 in Figs. 1A-1C embody a system and method wherein the player is encouraged to spend the winnings in the primary lottery game embodied by the tickets 10 at the associated third-party vendor. Fig. 2 depicts a ticket 10 used a different embodiment wherein a bonus or second chance game is associated with the primary game. This type of "bonus" or "second chance" game associated with lottery tickets 10 (in particular with scratch-off lottery tickets) are well-known to those skilled in the art and are generally intended to encourage players to enter their ticket 10 in a secondary game (e.g., a drawing-type game or raffle) for a lesser value prize. The indicia 23 encourages the player to spend any winnings from the bonus/second chance game at the third-party vendor identified by the indicia 22.

The table in Fig. 3 depicts an example of a common prize structure 58 for a primary game 56 associated with the scratch-off lottery tickets 10 discussed above. A single multi-tier prize structure 58 is established for the game that includes at least one top tier prize 26 and a plurality of lower-tier prize levels 28. In the depicted embodiment, there are fourteen (14) top tier prizes 28 of $1,000,000 each (for fourteen winning tickets) and multiple prizes (for winning tickets) for each of the lower tier prize levels 28.

The diagrams of Figs. 4-7 are used to discuss aspects of embodiments 50 of the method and system of the present disclosure.

In Fig. 4, three third-party vendors 52 are identified and partnered with a lottery game provider 53, which is generally understood to be a party that manages and implements the lottery game for a specific jurisdiction (e.g., a state or other government entity). An example of a lottery provider is Scientific Games having a principal place of business in Alpharetta, GA, USA. The lottery provider supplies the lottery tickets 10 for play of the primary game 56. A subset of the tickets 10 identify each of the vendors A, B, C, as discussed above. The subsets may be randomly distributed throughout the total ticket run such that when a player purchases a ticket 10, the identity of the vendor 52 associated with the ticket 10 is random and unknow to the player at the time of purchase. It is also possible that the subsets for the vendors A, B, and C are maintained separate such that a player can request a ticket 10 associated with a particular vendor 52.

Still referring to Fig. 4, the players may be provided with an individualized digital account 59 that may be set up via a website associated with the lottery provider 53. Each account 59 may include a sub-wallet 62 for each of the individual vendors 52 partnered with the lottery provider 53. For example, in the embodiment of Fig. 4, each account 59 may include three sub-wallets 62 corresponding to the three vendors A, B, C.

Fig. 4 also identifies a third-party financial services provider 68 that may provide services related to transferring proceeds from winning lottery tickets into the sub-wallets 62 and between the sub-wallets 62 and the vendors 52.

Fig. 4 also identifies an incentive wallet 63 associated with each player account 59, which is explained in greater below.

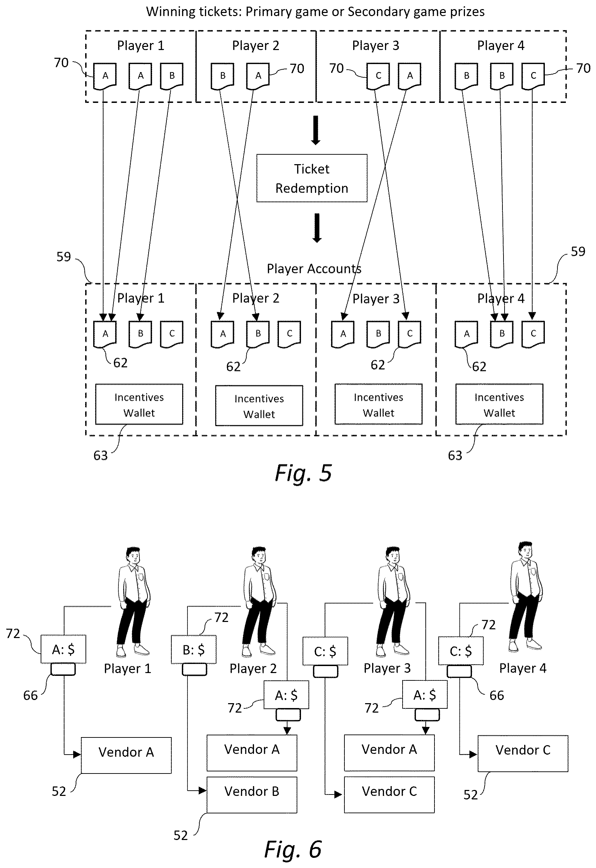

Fig. 5 depicts a redemption process wherein certain of the players hold winning lottery tickets 70 in the primary game or in the bonus/second chance game discussed above. These tickets 70 identify a specific vendor A, B, or C and have a monetary value that is credited to the sub-wallet 62 in the player's account 59 associated with the respective vendor. In a particular embodiment, the winning lottery tickets 70 have won a cash prize in the primary prize structure 58 (Fig. 3) of the primary lottery game and this cash value is credited directly into the appropriate sub-wallet 62, wherein the player can access and spend funds directly from the sub-wallet 62. It should be appreciated that the funds in the sub-wallet 62 are not restricted to being spent only at the associated vendor A, B, C. The player can access and spend the funds in any manner they choose. The sub-wallets 62 serve as a convenient means to earmark or identify funds that eligible for earing an incentive if they are spent at the associated vendors A, B, C.

Fig. 6 depicts the players spending the funds 72 (corresponding to the winnings in the primary and/or second chance/bonus games) in their sub-wallets 62 at the associated vendor establishments 52. For example, the player may visit a big box establishment 52 for vendors A, B (Figs. 1A-1B), a restaurant establishment 52 for vendor C (Fig. 1C), a website maintained by a retail vendor establishment, and so forth, to spend the funds 72. In the embodiment wherein the funds are held in the sub-wallets 62, the player may be provided an account card 66 (real or digital) that functions essentially as a debit card linked to the sub-wallets 62. As part of their partnership with the lottery provider 53 and the financial services provider 68, the vendor establishments 52 accept the account cards 66 for payment of goods or services. The third party financial services provider 68 may be any company that enables the electronic transfer of funds between organizations via a card program or other means.

In an alternate embodiment, the funds 72 from winning lottery tickets 70 are remitted directly to the player without restriction as to where the player subsequently deposits or spends the funds. The amount of the winnings 70 are, however, credited to the sub-wallets 62, which essentially function as accounting ledgers. When the player spends money (e.g., cash or credit) at one of the vendor establishments A, B, C, the account card 66 is presented to the vendor who, in turn, communicates with the lottery provider 53 to notify the provider of the amount that the player spent. The lottery provider 53 then deducts this amount from the total reflected in the sub-walled 62 associated with the vendor establishment. This process may be conducted through an appropriate communications network established between the lottery provider 53 and the vendor establishments.

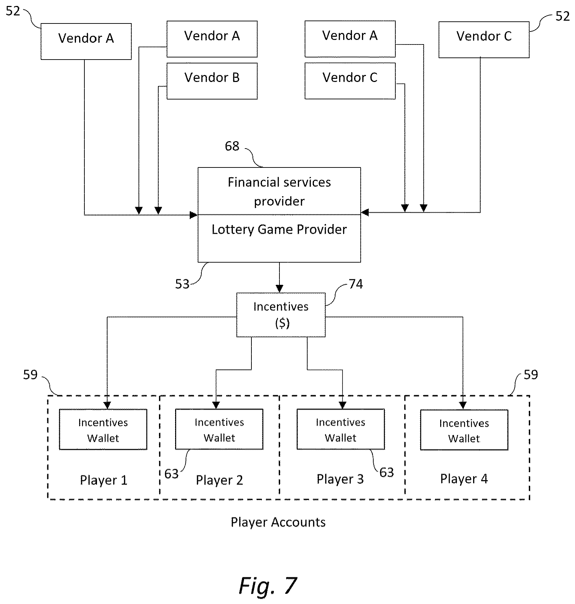

Fig. 7 depicts that the vendors 52 have reported to the financial services provider 68 and/or lottery game provider 53 the amount of funds spent by the players at their establishments. The lottery game provider 53 then determines the proportional incentive 74 associated with the funds and transfers the incentives 74 into the players' incentive wallet 63. The incentive 74 may take on any form that entices players to visit the vendor establishments 52, such as a monetary award, points in an award program, discounts at the vendor establishments 52, and so forth.

It should be appreciated by those skilled in the art that various modifications and variations may be made present invention without departing from the scope and spirit of the invention. It is intended that the present invention include such modifications and variations as come within the scope of the appended claims.

## Claims

1. A method for play of a lottery game that encourages a player to visit and spend winnings from the lottery game at a third party vendor establishment, the method comprising:
providing lottery tickets for play of a primary game having a common prize structure, the lottery tickets having indicia thereon that identifies one of a plurality of third party vendors;
providing a personalized digital wallet for the player, wherein the digital wallet includes sub-wallets for each of the third party vendors;
upon the player redeeming a lottery ticket, crediting the winnings from the winning lottery ticket to the sub-wallet for the third party vendor identified on the winning lottery ticket;
providing instructions to the player to visit and spend the winnings credited to the sub-wallet at the third party vendor establishment; and
transferring an incentive to the player having a value proportional to the winnings spent at the third party vendor establishment.

2. The method according to claim 1, wherein the lottery tickets are scratch-off lottery tickets.

3. The method according to claim 1 or 2, wherein the winnings credited to the sub-wallet are for a prize in the common prize structure for the primary game.

4. The method according to any one of claims 1-3, wherein the lottery game includes a bonus or second chance game component, and the winnings credited to the sub-wallet are for a prize in the bonus or second chance game component.

5. The method according to any one of claims 1-4, wherein the sub-wallets have an actual cash value corresponding to the winnings such that the player spends the winnings directly from the sub-wallet at the third party vendor establishment, wherein the player preferably provides an account identifier to the third party vendor that is linked to the sub-wallet for transferring funds from the sub-wallet to the third party vendor.

6. The method according to any one of claims 1-5, wherein the winnings are credited to the sub-wallets are a virtual cash value corresponding to cash awarded directly to the player for the winning lottery tickets redeemed by the player, wherein the player preferably provides an account identifier to the third party vendor that is linked to the sub-wallet for virtually transferring funds out of the sub-wallet corresponding to an amount spent by the player at the third party vendor.

7. The method according to any one of claims 1-6, wherein the incentive provided to the player has a monetary value proportional to the winnings spent at the third party vendor establishment.

8. The method according to any one of claims 1-7, wherein the incentive provided to the player is credited to a personalized digital account assigned to the player.

9. A system for play of a lottery game that encourages a player to visit and spend winnings from the lottery game at a third party vendor establishment, the system comprising:
a plurality of lottery tickets in a primary game having a common prize structure, the lottery tickets comprising indicia thereon that identifies one of a plurality of third party vendors;
personalized digital wallets created for players in the primary game, wherein each of the digital wallets comprises a sub-wallet for each of the third party vendors;
wherein upon the players redeeming a winning one of the lottery tickets, the winnings from the winning lottery ticket are credited to the sub-wallet for the third party vendor identified on the winning lottery ticket;
instructions provided to the player to visit and spend the winnings credited to the sub-wallets at the third party vendor establishments; and
an incentive award transferable to the players, the incentive award having a value proportional to the winnings spent at the third party vendor establishment.

10. The system according to claim 9, wherein the lottery tickets comprise scratch-off lottery tickets and the instructions provided to the player are printed on the scratch-off lottery tickets.

11. The system according to claim 9 or 10, wherein the winnings credited to the sub-wallet correspond to a prize in the common prize structure for the primary game.

12. The system according to any one of claims 9-11, wherein the lottery tickets comprise a bonus or second chance game component, and the winnings credited to the sub-wallet are for a prize in the bonus or second chance game component.

13. The system according to any one of claims 9-12, wherein the winnings credited to the sub-wallets comprise an actual cash value such that the player spends the winnings directly from the sub-wallet at the third party vendor establishment, the system further comprising unique account identifiers assigned to the players that are linked to the sub-wallet for transferring funds from the sub-wallet to the third party vendor.

14. The system according to any one of claims 9-13, wherein the incentive provided to the player comprises a monetary value proportional to the winnings spent at the third party vendor establishment.

15. The system according to any one of claims 9-14, further comprising personalized digital accounts created for the players, wherein the incentive provided to the player is credited to the personalized digital account assigned to the player.
